# EUROPÄISCHE PATENTSCHRIFT

(11) **EP 1 871 998 B1**
(45) Veröffentlichungstag und Bekanntmachung des Hinweises auf die Patenterteilung: **09.07.2008**
(21) Anmeldenummer: 06708217.2
(22) Anmeldetag: 13.02.2006
(51) Int. Cl.: F01P 7/04, H02K 9/28

(54) **LÜFTERSYSTEM UND VERFAHREN ZUM STEUERN EINES LÜFTERMOTORS**
FAN SYSTEM AND A METHOD FOR CONTROLLING A FAN MOTOR
SYSTEME DE VENTILATEUR ET PROCEDE DE COMMANDE D'UN MOTEUR DE VENTILATEUR

(30) Priorität: 11.04.2005 DE 102005016452
(43) Veröffentlichungstag der Anmeldung: 02.01.2008
(73) Patentinhaber: ROBERT BOSCH GMBH, 70442 Stuttgart (DE)
(72) Erfinder: KNAB, Norbert, 77767 Appenweier (DE); VOGT, Richard, 77731 Willstaett (DE); HABERL, Nikolas, 76547 Sinzheim (DE)
(86) Internationale Anmeldenummer: PCT/EP2006/050876
(87) Internationale Veröffentlichungsnummer: WO 2006/108728

(56) Entgegenhaltungen:
- US-A- 4 378 760
- US-A1- 2002 195 069
- US-A1- 2004 113 573
- PATENT ABSTRACTS OF JAPAN Bd. 014, Nr. 463 (E-0988), 8. Oktober 1990 (1990-10-08) & JP 02 188144 A (TOSHIBA CORP), 24. Juli 1990 (1990-07-24)

## Beschreibung

Die Erfindung betrifft ein Lüftersystem und Verfahren zum Steuern eines Lüftermotors.

Die Erfindung betrifft ein Lüftersystem zum geregelten Kühlen eines Verbrennungsmotors eines Kraftfahrzeugs. Die Erfindung betrifft weiterhin ein Verfahren zum Steuern eines Lüftermotors.

Lüftermotoren in Motorkühlgebläsen werden üblicherweise mit hochfrequenten Taktreglern (sog. FCMs, Fan Control Moduls) nahezu stufenlos angesteuert. Dies ermöglicht u.a. eine auf den aktuellen Kühlbedarf abgestimmte Gebläseleistung. Der Taktregler selbst wird üblicherweise mit Hilfe eines niederfrequenten Pulsweiten-Modulationssignals im Bereich von ca. 5 bis 300 Hz angesteuert, das den Grad der Ansteuerung des Lüftermotors vorgibt.

Ein Lüftersystem zum Durchführen einer geregelten Kühlung für einen Verbrennungsmotor in Kraftfahrzeugen wird für einen Kühlluftbedarf bei sehr hohen Umgebungstemperaturen und hohem Kühlungsbedarf des Verbrennungsmotors ausgelegt. Üblicherweise weist ein Lüftermotor für ein solches Lüftersystem eine Leistung im Bereich von 300 bis 600 W auf. Die Taktregler sind entsprechend ausgelegt und dienen dazu, die Lüftermotoren in geeigneter Weise anzusteuern, dass eine gewünschte Kühlleistung bereitgestellt wird.

Der Lüftermotor wird üblicherweise mit Frequenzen oberhalb 18 kHz angesteuert.

Ein Lüftersystem zum Durchführen einer geregelten Kühlung für einen Verbrennungsmotor wird im US 4 378 760 A gezeigt.

Obwohl die Lüftermotoren in der Regel auf eine hohe maximal benötigte Kühlleistung ausgelegt werden müssen, um bei extremen Betriebszuständen die benötigte Kühlleistung bereitstellen zu können, werden die Lüftermotoren für einen Großteil der Gesamtbetriebszeit im Normalbetrieb nur mit einer deutliche geringeren Leistung und somit mit einem geringeren Strom belastet.

Ein Lüftermotor weist in der Regel einen Kommutator auf, über den mit Hilfe Kontaktierungsbürsten die Rotorspulen des Lüftermotors bestromt werden können. Bei einer dauerhaften Ansteuerung mit einem zu geringen Strom und bei einer zu geringen Drehzahl des Lüftermotors tritt üblicherweise eine "Verpastung" des Kommutators auf, d.h. in die Schlitze zwischen den Kontaktlamellen des Kommutators setzt sich Kohlenstaub, Schmutz, Öl usw. ab, wobei die Verpastung durch den Kohlenstaub häufig leitfähig ist und somit einen Kurzschluss oder einen verringerten Widerstand zwischen den Lamellen bewirkt.

Es ist daher Aufgabe der vorliegenden Erfindung, eine Verpastung des Kommutators des Lüftermotors in einem Lüftersystem für die Durchführung einer geregelten Kühlung für einen Verbrennungsmotor zu vermeiden bzw. zu reduzieren. Es ist weiterhin Aufgabe der vorliegenden Erfindung, ein Verfahren zum Ansteuern eines Lüftermotors zur Verfügung zu stellen, mit dem eine Verpastung des Kommutators des Lüftermotors vermieden bzw. reduziert werden kann.

Diese Aufgabe wird durch das Lüftersystem nach Anspruch 1 sowie durch das Verfahren zum Steuern eines Lüftermotors nach Anspruch 8 gelöst.

Weitere vorteilhafte Ausgestaltungen der Erfindung sind in den abhängigen Ansprüchen angegeben.

Gemäß einem ersten Aspekt der vorliegenden Erfindung ist ein Lüftersystem zum Durchführen einer geregelten Kühlung für einen Verbrennungsmotor eines Kraftfahrzeugs vorgesehen. Das Lüftersystem weist einen elektrischen Lüftermotor und eine Steuereinheit zum Ansteuern des Lüftermotors auf. Die Steuereinheit steuert den Lüftermotor abhängig von einer gewünschten Kühlleistung mit einer Regel-Stellgröße an. Erfindungsgemäß ist die Steuereinheit so gestaltet, dass sie den Lüftermotor zu einem vorbestimmten Zeitpunkt unabhängig von der gewünschten Kühlleistung mit einer gegenüber der Regel-Stellgröße erhöhten Reinigungs-Stellgröße für eine vorbestimmte Zeitdauer ansteuert.

Das Lüftersystem der vorliegenden Erfindung hat den Vorteil, dass es zu dem bestimmten Zeitpunkt die Regelung der Ansteuerung des Lüftermotors verlässt und den Lüftermotor mit einer "Reinigungs"-Stellgröße ansteuert, die größer ist, als die Regel-Stellgröße. Durch die erhöhte Ansteuerung des Motors mit der Reinigungs-Stellgröße für die vorbestimmte Zeitdauer kann einer Verpastung eines Kommutators des Lüftermotors entgegengewirkt bzw. eine bereits bestehende Verpastung reduziert oder eliminiert werden. Dies wird durch zwei im Wesentlichen voneinander unabhängige Effekte erreicht. Die erhöhten Fliehkräfte bei einer erhöhten Drehzahl des Lüftermotors bewirken zum einen, dass sich die Verpastung, die sich zwischen den Kontaktlamellen des Kommutators befindet, herausgeschleudert wird. Zum anderen bewirkt der erhöhte Stromfluss durch eine erhöhte Ansteuerung des Lüftermotors mit der Reinigungs-Stellgröße, dass sich der Stromfluss zwischen den Lamellen des Kommutators durch den reduzierten elektrischen Widerstand einer bereits entstandenen Verpastung erhöht und dadurch die Verpastung verdampft, weggebrannt oder durch sonstige Effekte entfernt wird. Da eine solche Verpastung insbesondere bei länger andauerndem Betrieb bei niedrigen Drehzahlbereichen bzw. niedrigem Ansteuerstrom auftritt, wird durch die erfindungsgemäße Ansteuerung des Lüftermotors mit der Reinigungs-Stellgröße zu dem bestimmten Zeitpunkt einer solchen Verpastung entgegengewirkt.

Gemäß einer Ausführungsform der Erfindung kann die Steuereinheit den Lüftermotor in regelmäßigen Zeitabständen unabhängig von der gewünschten Kühlleistung mit der gegenüber der Reinigungs-Stellgröße für die vorbestimmte Zeitdauer ansteuern.

Dies stellt eine besonders einfache Weise dar, die Verpastung des Lüftermotors über einen großen Betriebszeitraum zu vermeiden.

Vorzugsweise betragen die regelmäßigen Zeitabstände zwischen einer Betriebsstunde und mehreren zehn Betriebsstunden.

Gemäß einer Ausführungsform der Erfindung kann die Steuereinheit so gestaltet sein, dass sie den Lüftermotor mit der Reinigungs-Stellgröße nur dann steuert, wenn nach einer vorangehenden Ansteuerung mit der Reinigungs-Stellgröße eine vorbestimmte Normalbetriebsdauer bei einer Ansteuerung mit der Regel-Stellgröße vergangen ist, und wenn sich das Kraftfahrzeug mit einer Geschwindigkeit größer als die Mindestgeschwindigkeit bewegt und/oder die Drehzahl des Verbrennungsmotors größer ist als eine Mindestdrehzahl. Auf diese Weise ist es möglich zu vermeiden, dass das Fahrzeug im Stand angesteuert wird, wo das erhöhte Laufgeräusch des mit der Reinigungs-Stellgröße angesteuerten Lüftermotors unter Umständen eine Geräuschbelastung für die Umgebung darstellt. Deshalb ist vorgesehen, abhängig von in der Motorsteuerung vorliegenden Informationen über den Betriebszustand des Kraftfahrzeugs zu entscheiden, ob der Lüftermotor mit der erhöhten Reinigungs-Stellgröße angesteuert werden soll oder nicht.

Gemäß einer weiteren Ausführungsform der Erfindung kann die Steuereinheit so ausgeführt sein, dass sie den Lüftermotor mit der Reinigungs-Stellgröße zum vorbestimmten Zeitpunkt nur dann ansteuert, wenn die Regelstellgröße den Lüftermotor mit einer Leistung ansteuert, die kleiner ist als ein vorbestimmter Anteil einer Maximalleistung, mit der der Lüftermotor ansteuerbar ist. Auf diese Weise wird sichergestellt, dass, wenn bereits eine maximale Kühlleistung von dem Lüftermotor abgerufen wird, die Regelung des Lüftermotors nicht unterbrochen wird, um die Reinigungs-Stellgröße anzulegen, da in diesem Fall bereits die Ansteuerung des Lüftermotors mit der Regel-Stellgröße die Verpastung des Lüftermotors vermeidet bzw. reduziert.

Gemäß einem weiteren Aspekt der vorliegenden Erfindung ist ein Verfahren zum Steuern eines Lüftermotors für einen Verbrennungsmotor eines Kraftfahrzeugs vorgesehen. Der Lüftermotor wird abhängig von einer gewünschten Kühlleistung mit einer Regel-Stellgröße angesteuert. Weiterhin wird der Lüftermotor zu einem vorbestimmten Zeitpunkt unabhängig von der gewünschten Kühlleistung mit einer gegenüber der Regelstellgröße erhöhten Reinigungs-Stellgröße für eine vorbestimmte Zeitdauer angesteuert.

Der Lüftermotor kann in regelmäßigen Zeitabständen unabhängig von der gewünschten Kühlleistung mit der Reinigungs-Stellgröße für die vorbestimmte Zeitdauer angesteuert werden.

Gemäß einer weiteren Ausführungsform der Erfindung kann der Lüftermotor mit der Reinigungs-Stellgröße nur dann angesteuert werden, wenn nach einer vorangehenden Ansteuerung mit der erhöhten Stellgröße eine vorbestimmte Normalbetriebsdauer vergangen ist, und wenn sich das Kraftfahrzeug in einem bestimmten Betriebszustand befindet, insbesondere wenn sich das Kraftfahrzeug mit einer Geschwindigkeit größer als eine Mindestgeschwindigkeit bewegt und/oder die Drehzahl des Verbrennungsmotors größer ist als eine Mindestdrehzahl.

Gemäß einer weiteren Ausführungsform der Erfindung kann der Lüftermotor mit der Reinigungs-Stellgröße zum vorbestimmten Zeitpunkt nur dann angesteuert werden, wenn die Regelstellgröße den Lüftermotor mit einer Leistung ansteuert, die kleiner ist als ein vorbestimmter Anteil einer Maximalleistung, mit der der Lüftermotor ansteuerbar ist.

Bevorzugte Ausführungsformen werden nachfolgend anhand der beigefügten Zeichnungen näher erläutert. Es zeigen:
Figur 1 ein schematisches Blockschaltbild eines Lüftersystems für einen Verbrennungsmotor;
Figur 2 eine schematische Darstellung eines Kommutators des Lüftermotors, und
Figur 3 ein Signaldiagramm, das qualitativ einen Verlauf der Stellgröße zur Ansteuerung des Lüftermotors für eine Ausführungsform der Erfindung darstellt.

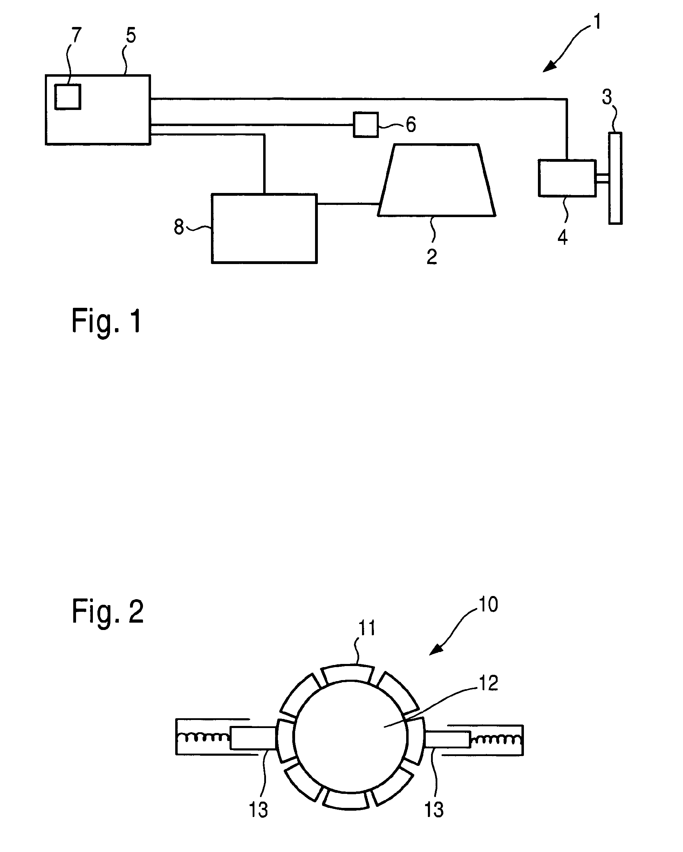

In Figur 1 ist ein Lüftersystem 1 für einen Verbrennungsmotor 2 in einem Kraftfahrzeug (nicht gezeigt) schematisch als Blockdiagramm dargestellt. Das Lüftersystem 1 weist ein Lüftergebläse 3 mit einem Lüftermotor 4 auf. Der Lüftermotor 4 ist elektrisch mit einer Steuereinheit 5 verbunden, die den Lüftermotor 4 in geeigneter Weise mit einer Stellgröße stufenlos ansteuert. Die Ansteuerung des Lüftermotors erfolgt in diesem Ausführungsbeispiel mit Hilfe von pulsweitenmodulierten Signalen mit einer Frequenz oberhalb von 18 KHz. Auch andere Möglichkeiten und Verfahren zur Ansteuerung des Lüftermotors, mit denen der Lüftermotor stufenlos oder in mehreren Stufen angesteuert wird, sind möglich. Die Stellgröße ist üblicherweise eine Spannung oder ein Strom, die der als PWM-Signal oder kontinuierlich bereitgestellt wird.

Die Ansteuerung des Lüftermotors wird entsprechend einer zuvor ermittelten benötigten Kühlleistung des Verbrennungsmotors 2 vorgenommen. Die benötigte Kühlleistung wird in diesem Ausführungsbeispiel von der Temperatur des Verbrennungsmotors 2 abgeleitet, die mit Hilfe eines Temperatursensors 6, der in der Nähe des Verbrennungsmotors 2 üblicherweise im Wasserkreislauf angeordnet und mit der Steuereinheit 5 verbunden ist, ermittelt.

Das Lüftergebläse 3, insbesondere der Lüftermotor 4, ist so ausgelegt, um eine hohe maximale Kühlleistung für den Verbrennungsmotor 2 zur Verfügung zu stellen. Diese hohe Kühlleistung wird jedoch nur in Ausnahmefällen, d.h. bei extremen Belastungen und Wärmeentwicklung des Verbrennungsmotors 2 abgerufen. Im normalen Kühlbetrieb steuert daher die Steuereinheit 4 den Lüftermotor 4 so an, dass eine üblicherweise deutlich geringere Kühlleistung erbracht wird.

Dies bewirkt, dass sich der Lüftermotor 4 mit einer deutlich geringeren Drehzahl als die Maximaldrehzahl dreht, und dass an dem Lüftermotor 4 nur ein bezüglich eines Maximalstroms geringer Strom angelegt ist. Dies kann zur Folge haben, dass ein Kommutator des Lüftermotors 4 verpastet, d.h., dass die Schlitze zwischen den Lamellen des Kommutators durch Kohlenstaub, Schmutz, Öl und/oder andere Stoffe gefüllt werden, wodurch der elektrische Widerstand zwischen den Lamellen des Kommutators sinkt und die Leistungsfähigkeit des Lüftermotors 4 reduziert wird oder unter Umständen sogar ein Kurzschluss zwischen den Lamellen des Kommutators entsteht, der das Lüftersystem beschädigen kann.

Ein solcher Kommutator ist in Figur 2 schematisch dargestellt. Man erkennt den Kommutator 10, auf dem acht Kontaktlamellen 11 (die Zahl der Kontaktlamellen 8 ist im wesentlichen beliebig) angebracht sind, die elektrisch isoliert auf einer Welle 12 des Lüftermotors angeordnet sind. Die Kontaktlamellen 11 sind elektrisch mit Rotorspulen des Lüftermotors verbunden. Zwischen den Kontaktlamellen 11 befinden sich Schlitze, die zum elektrischen Isolieren der Kontaktlamellen 11 gegeneinander dienen. Die Lamellen 11 werden mit Hilfe von sogenannten Bürsten 13 kontaktiert, die mit Federkraft auf die Lamellen 11 gedrückt werden , so dass eine ständige Kontaktierung zwischen den Bürsten 13 und den Lamellen 11 besteht. Über die Bürsten 13 gelangt ein elektrischer Strom zu den Rotorspulen des Lüftermotors 2.

Beim Betrieb des Motors gleiten die Bürsten 13 auf den Lamellen 11 und bewirken beispielsweise einen Abrieb, der sich als Staub vorzugsweise in die Schlitze zwischen den Lamellen 11 absetzt. Da das Material der Bürsten 13 leitfähig ist, ist auch das abgeriebene Material, das sich zwischen die Lamellen 11 setzt, leitfähig. Zudem setzen sich zwischen die Lamellen 11 auch Schmutz, Öl und andere, in der unmittelbaren Umgebung befindliche Materialen ab. Zwischen den Lamellen 11 bildet sich also eine Paste aus einer Mischung verschiedener Materialien ab, die im wesentlichen leitfähig ist und somit den Widerstand zwischen zwei Lamellen 11 verringert bzw. zwei benachbarte Lamellen miteinander kurzschließt. Dieser Effekt ist unerwünscht, da er die ordnungsgemäße Ansteuerung des Lüftermotors 4 verhindert und unter Umständen zu einer Fehlfunktion oder Zerstörung des Lüftermotors führen kann.

Um diesem Effekt entgegenzuwirken, ist es notwendig, den Lüftermotor zumindest zeitweilig bei einer hohen Drehzahl (in einem Bereich zwischen 70% bis 100% der Maximaldrehzahl) bzw. bei einer maximalen Drehzahl zu betreiben, damit die Verpastung zwischen den Lamellen 11 durch Fliehkräfte abgeschleudert wird und/oder den Lüftermotor so anzusteuern, dass der Strom für die Ansteuerung so groß wird (vorzugsweise zwischen 70%% bis 100% des maximalen Stromes), dass durch die Verpastung zwischen zwei benachbarten Lamellen 11 ein so hoher Strom fließt, dass die Verpastung verdampft, weggebrannt oder durch einen sonstigen Effekt entfernt wird. Dadurch können die Zwischenräume zwischen den Lamellen 11 gereinigt werden.

Da Lüftermotoren im Normalbetrieb des Lüftersystems meist mit einer Stellgröße angesteuert werden, die einer geringeren Drehzahl und einem geringeren Ansteuerstrom entspricht, ist es notwendig, zu einem oder mehreren vorbestimmten Zeitpunkten zur Vermeidung oder Reduzierung der Verpastung zwischen den Lamellen 11 des Kommutators eine erhöhte Reinigungs-Stellgröße, z.B. eine erhöhte Ansteuerspannung bzw. Ansteuerstrom, an den Lüftermotor anzulegen. Die Zeitdauer, während der die Reinigungs-Stellgröße angelegt wird, sollte so gewählt sein, dass sie ausreicht, eine bestehende Verpastung zwischen den Lamellen 11 zu entfernen. Üblicherweise wird die Zeitdauer, während der die Stellgröße anliegt, im Bereich von Minuten bis mehreren Stunden betragen. Die Zeitdauer, während der die Reinigungs-Stellgröße an den Lüftermotor angelegt wird, kann auch abhängig von einer durch einen Zustandsdetektor 7 in der Steuereinheit 5 ermittelten Verpastungs-Messgröße sein, wobei die Verpastungs-Messgröße ein Maß für die bestehende Verpastung des Kommutators ist.

Die Reinigungs-Stellgröße kann beispielsweise so gewählt sein, dass der Lüftermotor mit einer Kühlleistung vorzugsweise in einem Kühlleistungsbereich von 70 bis 100% der maximalen Kühlleistung, vorzugsweise bei der maximalen Kühlleistung, betrieben wird.

Die Zeitpunkte, zu denen die Steuereinheit 5 den Lüftermotor 4 unabhängig von der gewünschten Kühlleistung (z.B. durch die Temperatur des Verbrennungsmotors 2 vorgegeben) mit der Reinigungs-Stellgröße ansteuert, können beispielsweise durch einen Zeitgeber voreingestellt sein, der in regelmäßigen Zeitabständen den Lüftermotor mit der Reinigungs-Stellgröße ansteuert. Die regelmäßigen Zeitabstände können beispielsweise zwischen einer Betriebsstunde und mehreren zehn Betriebsstunden des Verbrennungsmotors 2 betragen.

Insbesondere kann die Steuereinheit 5 den Lüftermotor 4 mit der Reinigungs-Stellgröße nur dann ansteuern, wenn nach einer vorangehenden Ansteuerung mit der Reinigungs-Stellgröße eine vorbestimmte Normalbetriebsdauer vergangen ist, während der der Lüftermotor gemäß dem Normalbetrieb abhängig von der gewünschten Kühlleistung mit der Regel-Stellgröße betrieben wird. Zudem kann bei diesem Ausführungsbeispiel der Lüftermotor 4 nur dann mit der Reinigungs-Stellgröße nach der vorbestimmten Normalbetriebsdauer angesteuert werden, wenn sich das Kraftfahrzeug, in dem sich der Verbrennungsmotor 2 befindet, in einem Betriebszustand befindet, bei dem ein erhöhtes Umgebungsgeräusch vorliegt. Ein solcher Betriebszustand liegt beispielsweise vor, wenn sich das Kraftfahrzeug mit einer Geschwindigkeit bewegt, die größer ist als eine Mindestgeschwindigkeit und/oder wenn die Drehzahl des Verbrennungsmotors 2 größer ist als eine Mindestdrehzahl. Die Information über die Geschwindigkeit des Fahrzeugs bzw. über die Drehzahl des Verbrennungsmotors 2 können der Steuereinheit 5 von einer Motorsteuerung 8 bereitgestellt werden. Die Geschwindigkeit des Fahrzeugs bzw. die Drehzahl des Verbrennungsmotors werden bei dieser Ausführungsform als Maßzahl für die Umgebungsgeräusche des Fahrzeugs genutzt, so dass der Lüftermotor nur dann mit der Reinigungs-Stellgröße angesteuert wird, wenn die Umgebungsgeräusche des Fahrzeugs durch eine höhere Geschwindigkeit oder eine höhere Drehzahl des Verbrennungsmotors 2 erhöht sind. Dies reduziert die Geräuschbelästigung der Umgebung durch den erhöht angesteuerten Lüftermotor 4.

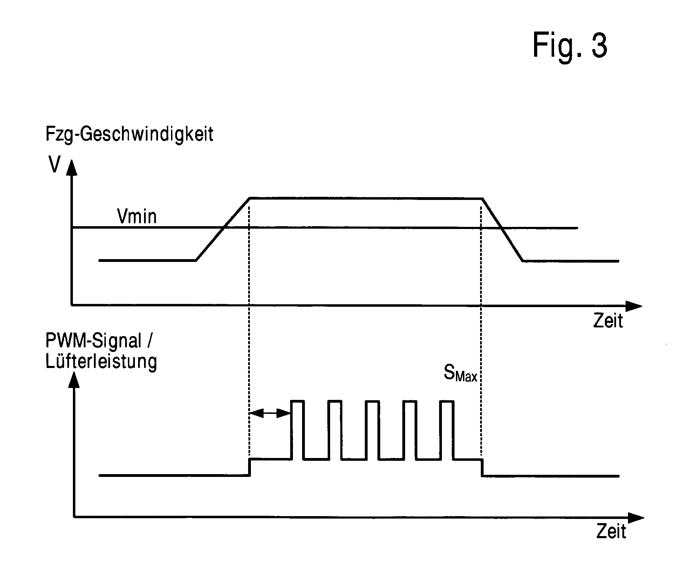

Ein solches Betriebsverhalten ist in dem Signal-Zeit-Diagramm der Figur 3 dargestellt. In dem oberen Teil des Diagramms ist die Fahrzeuggeschwindigkeit über die Zeit aufgetragen und in dem unteren Teil des Diagramms die Stellgröße zur Ansteuerung des Lüftermotors 4. Man erkennt, dass der Lüftermotor mit einer maximalen Stellgröße Sₘₐₓ zyklisch nur dann angesteuert wird, wenn sich das Fahrzeug mit einer Geschwindigkeit über der Mindestgeschwindigkeit Vₘᵢₙ bewegt.

Gemäß einer weiteren Ausführungsform der Erfindung kann der Normalbetrieb des Lüftermotors, d.h. die Regelung des Lüftermotors 4, abhängig von einer Temperatur des Verbrennungsmotors 2 nur dann verlassen werden, wenn die Regel-Stellgröße zur Ansteuerung des Lüftermotors 4 in dem Normalbetrieb zu einer Kühlleistung führt, die kleiner ist als ein vorbestimmter Anteil einer Maximalkühlleistung, mit der der Lüftermotor ansteuerbar ist. Dadurch wird erreicht, dass das Lüftersystem den Normalbetrieb der Regelung des Lüftermotors abhängig von dem Kühlleistungsbedarf nicht verlassen muss, wenn der Lüftermotor ohnehin mit einer Regel-Stellgröße angesteuert wird, die eine ausreichend hohe Drehzahl und eine ausreichend hohe Ansteuersteuerung hervorruft, durch die eine Verpastung des Kommutators des Lüftermotors 4 vermieden bzw. reduziert werden kann. Der vorbestimmte Anteil der Maximalkühlleistung kann beispielsweise zwischen 50 und 100%, vorzugsweise 70%, betragen.

## Patentansprüche

1. Lüftersystem (1) zum Durchführen einer geregelten Kühlung für einen Verbrennungsmotor (2) eines Kraftfahrzeugs,
mit einem elektrischen Lüftermotor (4), und
mit einer Steuereinheit (5) zum Ansteuern des Lüftermotors, wobei die Steuereinheit (5) den Lüftermotor abhängig von einer gewünschten Kühlleistung mit einer Regel-Stellgröße ansteuert, **dadurch gekennzeichnet, dass** die Steuereinheit (5) so gestaltet ist, dass sie den Lüftermotor (4) zu einem bestimmten Zeitpunkt unabhängig von der gewünschten Kühlleistung mit einer gegenüber der Regel-Stellgröße erhöhten Reinigungs-Stellgröße für eine vorbestimmte Zeitdauer ansteuert.

2. Lüftersystem (1) nach Anspruch 1, **dadurch gekennzeichnet, dass** der Lüftermotor (4) einen Kommutator (10) aufweist.

3. Lüftersystem (1) nach Anspruch 1 oder 2, **dadurch gekennzeichnet, dass** die Steuereinheit (5) den Lüftermotor in regelmäßigen Zeitabständen unabhängig von der gewünschten Kühlleistung mit der gegenüber der Reinigungs-Stellgröße für die vorbestimmte Zeitdauer ansteuert.

4. Lüftersystem (1) nach Anspruch 3, **dadurch gekennzeichnet, dass** die regelmäßigen Zeitabstände zwischen einer Betriebsstunde und mehreren zehn Betriebsstunden betragen.

5. Lüftersystem (1) nach einem der Ansprüche 1 bis 4, **dadurch gekennzeichnet, dass** die Steuereinheit (5) so gestaltet ist, dass sie den Lüftermotor (4) mit der Reinigungs-Stellgröße nur dann ansteuert, wenn nach einer vorangehenden Ansteuerung mit der erhöhten Stellgröße eine vorbestimmte Normalbetriebsdauer vergangen ist und wenn sich das Kraftfahrzeug in einem bestimmten Betriebszustand befindet, insbesondere wenn sich das Kraftfahrzeug mit einer Geschwindigkeit größer als eine Mindestgeschwindigkeit bewegt und/oder die Drehzahl des Verbrennungsmotors größer ist als eine Mindestdrehzahl.

6. Lüftersystem (1) nach Anspruch 5, **dadurch gekennzeichnet, dass** die vorbestimmte Normalbetriebsdauer zwischen einer Betriebsstunde und mehreren zehn Betriebsstunden beträgt.

7. Lüftersystem (1) nach einem der Ansprüche 1 bis 6, **dadurch gekennzeichnet, dass** die Steuereinheit (5) so ausgeführt ist, dass sie den Lüftermotor (4) mit der Reinigungs-Stellgröße zum vorbestimmten Zeitpunkt nur dann ansteuert, wenn die Regel-Stellgröße den Lüftermotor mit einer Leistung ansteuert, die kleiner ist ein vorbestimmter Anteil einer Maximalkühlleistung, mit der der Lüftermotor ansteuerbar ist.

8. Verfahren zum Steuern eines Lüftermotors (4) für einen Verbrennungsmotor (2) eines Kraftfahrzeugs,
wobei der Lüftermotor (4) abhängig von einer gewünschten Kühlleistung mit einer Regel-Stellgröße angesteuert wird,
**dadurch gekennzeichnet, dass**
der Lüftermotor (4) zu einem vorbestimmten Zeitpunkt unabhängig von der gewünschten Kühlleistung mit einer gegenüber der Regel-Stellgröße erhöhten Reinigungs-Stellgröße für eine vorbestimmte Zeitdauer angesteuert wird.

9. Verfahren nach Anspruch 8, **dadurch gekennzeichnet, dass** der Lüftermotor in regelmäßigen Zeitabständen unabhängig von der gewünschten Kühlleistung mit der Reinigungs-Stellgröße für die vorbestimmte Zeitdauer angesteuert wird.

10. Verfahren nach Anspruch 8, **dadurch gekennzeichnet, dass** der Lüftermotor (4) mit der Reinigungs-Stellgröße nur dann angesteuert wird, wenn nach einer vorangehenden Ansteuerung mit der Reinigungs-Stellgröße eine vorbestimmte Normalbetriebsdauer vergangen ist und wenn sich das Kraftfahrzeug in einem bestimmten Betriebszustand befindet, insbesondere wenn sich das Kraftfahrzeug mit einer Geschwindigkeit größer als eine Mindestgeschwindigkeit bewegt und/oder die Drehzahl des Verbrennungsmotors größer ist als eine Mindestdrehzahl.

11. Verfahren nach einem der Ansprüche 8 bis 10, **dadurch gekennzeichnet, dass** der Lüftermotor (4) mit der Reinigungs-Stellgröße zum vorbestimmten Zeitpunkt nur dann angesteuert wird, wenn die Regel-Stellgröße den Lüftermotor (4) mit einer Leistung ansteuert, die kleiner ist ein vorbestimmter Anteil der Maximalleistung, mit der der Lüftermotor (4) ansteuerbar ist.

## Claims

1. Fan system (1) for carrying out regulated cooling for an internal combustion engine (2) of a motor vehicle, having an electric fan motor (4), and having a control unit (5) for driving the fan motor, with the control unit (5) driving the fan motor with a regulating control variable as a function of a desired cooling power, **characterized in that** the control unit (5) is configured such that it drives the fan motor (4) for a predetermined time period with a cleaning control variable, which is increased in relation to the regulating control variable, at a specific time independently of the desired cooling power.

2. Fan system (1) according to Claim 1, **characterized in that** the fan motor (4) has a commutator (10).

3. Fan system (1) according to Claim 1 or 2, **characterized in that** the control unit (5) drives the fan motor for the predetermined time period with the cleaning control variable at regular time intervals independently of the desired cooling power.

4. Fan system (1) according to Claim 3, **characterized in that** the regular time intervals last for between one operating hour and several tens of operating hours.

5. Fan system (1) according to one of Claims 1 to 4, **characterized in that** the control unit (5) is configured such that it drives the fan motor (4) with the cleaning control variable only when a predetermined normal operating period has elapsed after preceding driving with the increased control variable, and when the motor vehicle is in a specific operating state, in particular when the motor vehicle moves at a speed which is greater than a minimum speed and/or the rotation speed of the internal combustion engine is greater than a minimum rotation speed.

6. Fan system (1) according to Claim 5, **characterized in that** the predetermined normal operating period lasts for between one operating hour and several tens of operating hours.

7. Fan system (1) according to one of Claims 1 to 6, **characterized in that** the control unit (5) is designed such that it drives the fan motor (4) with the cleaning control variable at the predetermined time only when the regulating control variable drives the fan motor with a power which is less than a predetermined proportion of a maximum cooling power with which the fan motor can be driven.

8. Method for controlling a fan motor (4) for an internal combustion engine (2) of a motor vehicle, with the fan motor (4) being driven with a regulating control variable independently of a desired cooling power, **characterized in that** the fan motor (4) is driven for a predetermined time period with a cleaning control variable, which is increased in relation to the regulating control variable, at a predetermined time independently of the desired cooling power.

9. Method according to Claim 8, **characterized in that** the fan motor is driven for the predetermined time period with the cleaning control variable at regular time intervals independently of the desired cooling power.

10. Method according to Claim 8, **characterized in that** the fan motor (4) is driven with the cleaning control variable only when a predetermined normal operating period has elapsed after preceding driving with the cleaning control variable, and when the motor vehicle is in a specific operating state, in particular when the motor vehicle moves at a speed which is greater than a minimum speed and/or the rotation speed of the internal combustion engine is greater than a minimum rotation speed.

11. Method according to one of Claims 8 to 10, **characterized in that** the fan motor (4) is driven with the cleaning control variable at the predetermined time only when the regulating control variable drives the fan motor (4) with a power which is less than a predetermined proportion of the maximum power with which the fan motor (4) can be driven.

## Revendications

1. Système de ventilateur (1) pour assurer un refroidissement régulé d'un moteur à combustion interne (2) d'un véhicule automobile comportant un moteur électrique de ventilateur (4) et une unité de commande (5) pour commander le moteur de ventilateur,
l'unité de commande (5) du moteur de ventilateur (4) étant commandée par une grandeur d'actionnement de régulation en fonction de la puissance de refroidissement souhaitée,
**caractérisé en ce que**
l'unité de commande (5) est conçue pour qu'elle commande le moteur de ventilateur (4) à un instant déterminé, indépendamment de la puissance de refroidissement souhaitée, avec une grandeur d'actionnement de nettoyage, augmentée par rapport à la grandeur d'actionnement de régulation, indépendamment de la puissance de refroidissement souhaitée pour une durée prédéfinie.

2. Système de ventilateur (1) selon la revendication 1,
**caractérisé en ce que**
le moteur de ventilateur (4) est un moteur à collecteur (10).

3. Système de ventilateur (1) selon la revendication 1 ou 2,
**caractérisé en ce que**
l'unité de commande (5) commande le moteur de ventilateur à des intervalles de temps réguliers, indépendamment de la puissance de refroidissement souhaitée, à durée prédéfinie vis-à-vis de la grandeur d'actionnement de nettoyage.

4. Système de ventilateur (1) selon la revendication 3,
**caractérisé en ce que**
les intervalles de temps d'actionnement sont compris entre une heure de fonctionnement et plusieurs dizaines d'heures de fonctionnement.

5. Système de ventilateur (1) selon l'une des revendications 1 à 4,
**caractérisé en ce que**
l'unité de commande (5) est conçue pour commander le moteur de ventilateur (4) avec une grandeur d'actionnement de nettoyage seulement si après une commande antérieure avec une grandeur d'actionnement augmentée, il s'est écoulé une durée de fonctionnement normale prédéfinie et si le véhicule se trouve dans un certain état de fonctionnement, notamment si le véhicule se déplace à une vitesse supérieure à une vitesse minimale et/ ou si la vitesse de rotation du moteur à combustion interne est supérieure à une vitesse de rotation minimale.

6. Système de ventilateur (1) selon la revendication 5,
**caractérisé en ce que**
la durée de fonctionnement normale, prédéfinie, est comprise entre une heure de fonctionnement et plusieurs dizaines d'heures de fonctionnement.

7. Système de ventilateur (1) selon l'une des revendications 1 à 6,
**caractérisé en ce que**
l'unité de commande (5) est conçue pour ne commander le moteur de ventilateur (4) avec la grandeur d'actionnement de nettoyage à un instant prédéfini que si la grandeur d'actionnement de régulation commande le moteur de ventilateur avec une puissance inférieure à une fraction prédéfinie de la puissance maximale de refroidissement à laquelle on peut commander le moteur de ventilateur.

8. Procédé de commande d'un moteur de ventilateur (4) pour un moteur à combustion interne (2) d'un véhicule automobile selon lequel
on commande le moteur de ventilateur (4) en fonction d'une puissance de refroidissement souhaitée avec une grandeur d'actionnement de régulation,
**caractérisé en ce qu'**
on commande le moteur de ventilateur (4) à un instant prédéfini, indépendamment de la puissance de refroidissement souhaitée, avec une grandeur d'actionnement de nettoyage augmentée par rapport à la grandeur d'actionnement de réglage pour une durée prédéfinie.

9. Procédé selon la revendication 8,
**caractérisé en ce qu'**
on commande le moteur de ventilateur à des intervalles de temps réguliers, indépendamment de la puissance de refroidissement souhaitée, avec la grandeur d'actionnement de nettoyage pour la durée prédéfinie.

10. Procédé selon la revendication 8,
**caractérisé en ce qu'**
on commande le moteur de ventilateur (4) avec la grandeur d'actionnement de nettoyage seulement si après une commande antérieure avec la grandeur d'actionnement de nettoyage, une durée de fonctionnement normale prédéfinie est écoulée et si le véhicule automobile se trouve dans un certain état de fonctionnement, notamment si le véhicule se déplace à une vitesse supérieure à une vitesse minimale et/ou si la vitesse de rotation du moteur à combustion interne est supérieure à une vitesse de rotation minimale.

11. Procédé selon l'une des revendications 8 à 10,
**caractérisé en ce que**
le moteur de ventilateur (4) est commandé avec la grandeur d'actionnement de nettoyage à l'instant prédéfini seulement si la grandeur d'actionnement de régulation commande le moteur de ventilateur (4) avec une puissance inférieure à une fraction prédéfinie de la puissance maximale avec laquelle le moteur de ventilateur (4) peut être commandé.
